# EUROPÄISCHE PATENTSCHRIFT

(11) **EP 3 924 950 B1**
(45) Veröffentlichungstag und Bekanntmachung des Hinweises auf die Patenterteilung: **13.03.2024**
(21) Anmeldenummer: 20701930.8
(22) Anmeldetag: 17.01.2020
(51) Int. Cl.: G08G 1/0965, B60W 30/18, G08G 1/16

(54) **VERFAHREN ZUM DURCHFÜHREN EINES FAHRMANÖVERS, STEUERVORRICHTUNG FÜR EIN FAHRZEUG SOWIE KRAFTFAHRZEUG**
METHOD FOR CARRYING OUT A DRIVING MANOEUVRE, CONTROL DEVICE FOR A VEHICLE, AND MOTOR VEHICLE
PROCÉDÉ D'EXÉCUTION D'UNE MANOEUVRE DE CONDUITE D'UN VÉHICULE, DISPOSITIF DE COMMANDE POUR UN VÉHICULE ET VÉHICULE À MOTEUR

(30) Priorität: 09.04.2019 DE 102019205034
(43) Veröffentlichungstag der Anmeldung: 22.12.2021
(73) Patentinhaber: Audi AG, 85045 Ingolstadt (DE)
(72) Erfinder: HEHN, Thorsten, 85055 Ingolstadt (DE); PLECHINGER, Jörg, 80469 München (DE)
(74) Vertreter: Hofstetter, Schurack & Partner
(86) Internationale Anmeldenummer: PCT/EP2020/051096
(87) Internationale Veröffentlichungsnummer: WO 2020/207631

(56) Entgegenhaltungen:
- DE-A1-102016 205 140
- DE-A1-102016 205 142
- DE-A1-102017 205 230
- US-A1- 2018 244 275

## Beschreibung

Die vorliegende Erfindung betrifft ein Verfahren zum Durchführen eines Fahrmanövers unter Beteiligung eines ersten und einer Vielzahl von zweiten Fahrzeugen, wobei durch das Fahrmanöver eine Verkehrsstromlücke erzeugt wird, die mehrere Fahrspuren breit ist. Die Erfindung betrifft überdies eine Steuervorrichtung für ein Fahrzeug sowie ein Kraftfahrzeug mit mindestens einer Kommunikationseinrichtung zum Kommunizieren mit anderen Kraftfahrzeugen.

Die vorliegende Erfindung befasst sich mit Fahrmanövern, zu deren Durchführung gleichzeitig oder in kurzer zeitlicher Abfolge Freiraum auf verschiedenen Fahrspuren benötigt wird. Dies kann beispielsweise das Queren einer mehrspurigen Fahrbahn betreffen oder das Rangieren mittels eines Lastkraftwagens, der zum Wenden oder Einparken den Verkehrsstrom auf einer Mehrzahl von Fahrspuren beeinträchtigt. Dies sind Situationen, die normalerweise einerseits gefährlich sind für den beteiligten Verkehr, andererseits häufig mit einer langen Wartezeit für die Nutzer verbunden sind.

Fahrmanöver, die mehrere Straßenabschnitte, insbesondere Fahrspuren, umfassen, sind gefährlich nicht nur für denjenigen, der das Fahrmanöver ausführen will, sondern auch für Fahrzeuge, die zufälligerweise in die Nähe des das Fahrmanöver ausführenden Fahrzeugs geraten. Am Beispiel des Querens einer Fahrbahn, die mehrere Fahrspuren breit ist, ist offensichtlich, dass die entlang der Fahrbahn fahrenden Fahrzeuge üblicherweise mit einer Richtgeschwindigkeit unterwegs sind, während die Geschwindigkeit des Querenden in Längsrichtung der Fahrbahn quasi Null ist. Bei einem Zusammenstoß verhält sich dies wie ein Aufprall auf ein stehendes Hindernis mit katastrophalen Folgen.

Aus der DE 10 2010 013 647 A1 ist ein Verfahren zum Steuern von mehreren Fahrzeugen bekannt, um die mehreren Fahrzeuge in einer Kolonne zu betreiben. Dieses umfasst innerhalb eines Leitfahrzeugs, das aus den mehreren Fahrzeugen ausgewählt ist, folgende Schritte: Überwachen einer jeweiligen tatsächlichen Position von jedem der mehreren Fahrzeuge, das nicht das Leitfahrzeug ist, durch eine Fahrzeug-zu-Fahrzeug-Kommunikation auf der Basis von Daten von einer jeweiligen globalen Positionsbestimmungsvorrichtung in jedem der mehreren Fahrzeuge, das nicht das Leitfahrzeug ist, Bestimmen von Abständen zum Betreiben der mehreren Fahrzeuge in der Kolonne auf der Basis der jeweiligen tatsächlichen Positionen von jedem der mehreren Fahrzeuge und Auswählen einer jeweiligen befohlenen Fahrzeugposition mit einer jeweiligen globalen Positionsbestimmungskoordinate für jedes der mehreren Fahrzeuge auf der Basis der bestimmten Abstände. Jede entsprechende befohlene Fahrzeugposition wird zum jeweiligen der mehreren Fahrzeuge übertragen, das nicht das Leitfahrzeug ist, und jedes entsprechende der mehreren Fahrzeuge, das nicht das Leitfahrzeug ist, wird auf Basis der jeweiligen befohlenen Fahrzeugposition betrieben.

Aus der DE 10 2016 205 142 A1 ist ein Verfahren zum Initiieren eines kooperativen Fahrmanövers durch Bereitstellen einer Fahrintentionsnachricht für Fahrzeuge in einer Umgebung eines Fahrzeugs bekannt. Die Fahrintentionsnachricht umfasst Information über eine Intention eines Fahrers oder eines zumindest teilautomatisierten Fahrzeugsteuersystems des Fahrzeugs, ein Fahrmanöver durchzuführen. Dabei erhalten die Fahrzeuge Information über eine Fahrintention, wobei die Fahrintention auf der Intention zum Durchführen des Fahrmanövers basiert. Dabei wird die Position des Fahrzeugs bestimmt und die Fahrintentionsnachricht basierend auf der Information über die Fahrintention. Anschließend werden Übertragungsparameter für die Fahrintentionsnachricht berechnet, wobei die Übertragungsparameter eine Wiederholrate und einen Sendezeitpunkt umfassen basierend auf einer gewünschten Empfangswahrscheinlichkeit der Fahrintentionsnachricht, der Fahrintention und der Position des Fahrzeugs. Schließlich wird die Fahrintentionsnachricht als direkte Fahrzeug-zu-Fahrzeug-Nachricht für die Fahrzeuge in der Umgebung des Fahrzeugs basierend auf den Übertragungsparametern bereitgestellt. Das Berechnen kann beispielsweise überprüfen, ob ein möglicher Fahrstreifenwechselpunkt mit den ein oder mehreren Fahrintentionen vereinbar ist.

Aus der US 2018/244275 A1 ist eine kooperative Fahrzeugnavigation bekannt. Dabei ist ein Computer dazu programmiert, einen Kurs eines ersten Fahrzeugs zu bestimmen. Der Computer ist weiterhin dazu programmiert, zu bestimmen, ob ein zweites Fahrzeug den Kurs versperrt. Auf eine solche Bestimmung hin sendet der Computer eine Anweisung an das zweite Fahrzeug, die Geschwindigkeit des zweiten Fahrzeugs anzupassen. Der Computer ist dazu programmiert, die Anweisung auf Grundlage des bestimmten Kurses des ersten Fahrzeugs, einer Position des zweiten Fahrzeugs und einer Geschwindigkeit des zweiten Fahrzeugs zu bestimmen.

Die Aufgabe der vorliegenden Erfindung besteht deshalb darin, die Verkehrssicherheit bei der Durchführung derartiger Fahrmanöver zu erhöhen.

Diese Aufgabe wird gelöst durch die jeweiligen Merkmale der unabhängigen Patentansprüche.

Die vorliegende Erfindung basiert auf der Erkenntnis, dass V2X- (Vehicle-to-everything) Kommunikation genutzt werden kann, um derartige Manöver sicherer und komfortabler zu gestalten. Insbesondere bei teil- oder vollpilotierten Kraftfahrzeugen sind ohnehin die entsprechenden Ressourcen vorhanden, um zu ermöglichen, dass sich die beteiligten Fahrzeuge zur Durchführung des Fahrmanövers abstimmen, sei es direkt durch Kommunikation von Fahrzeug zu Fahrzeug oder auch unter Einbeziehen einer Kommunikation über Infrastruktur. Ist zunächst keine ausreichende Anzahl von Fahrzeugen verfügbar, die über die entsprechenden Ressourcen verfügt, wird gewartet, bis eine ausreichende Anzahl erreicht ist. Da diese Anzahl an Fahrzeugen das Manöver untereinander organisieren, kommt die Durchführung des Manövers für diese Fahrzeuge nicht mehr überraschend. Vielmehr wird deren Geschwindigkeit und Position bis zur Durchführung des Fahrmanövers und weiter bis zum Abschluss des Fahrmanövers angepasst.

Ein erfindungsgemäßes Verfahren zum Durchführen eines Fahrmanövers unter Beteiligung eines ersten und einer Vielzahl von zweiten Fahrzeugen, wobei durch das Fahrmanöver eine Verkehrsstromlücke erzeugt wird, die mehrere Fahrspuren breit ist, umfasst demnach folgende Schritte: In einem Schritt a) sendet das erste Fahrzeug, das die Verkehrsstromlücke anfordert, periodisch entsprechende Anforderungssignale zumindest an eine Vielzahl von sich im Verkehrsstrom aufwärts des Orts der gewünschten Verkehrsstromlücke befindenden zweiten Fahrzeugen. In einem Schritt b) empfangen diese zweiten Fahrzeuge diese Anforderungssignale, wobei zumindest die zweiten Fahrzeuge, die der Anforderung nachkommen wollen, entsprechende Signalisierungssignale versenden. In einem Schritt c) wird geprüft, ob aufgrund des Empfangs der im Schritt b) gesendeten Signalisierungssignale eine zum Abdecken der mehreren Fahrspuren der gewünschten Verkehrsstromlücke ausreichende Mindestanzahl von zweiten Fahrzeugen, die der Anforderung nachkommen wollen, feststellbar ist, um mit einer entsprechenden Anzahl an zweiten Fahrzeugen eine entsprechende Anzahl an Fahrspuren zu blockieren, wobei die Fahrzeuge untereinander die Signalisierungssignale der jeweils anderen Fahrzeuge empfangen und auswerten, sodass die zur Realisierung des Fahrmanövers beteiligten zweiten Fahrzeuge selbst feststellen, ob bereits eine ausreichende Anzahl von zweiten Fahrzeugen vorliegt. Wird Schritt c) bejaht, werden in einem Schritt d) die an dem Fahrmanöver zum Erzeugen der Verkehrsstromlücke teilnehmenden zweiten Fahrzeuge informiert. Im Schritt e) vereinbaren die am Fahrmanöver teilnehmenden zweiten Fahrzeuge den Beginn des Fahrmanövers und stimmen ihre Trajektorien aufeinander ab, wobei die an dem Fahrmanöver teilnehmenden zweiten Fahrzeuge über eine vorgebbare Wegstrecke oder einen vorgebbaren Zeitraum ihre Geschwindigkeit reduzieren, sodass sie mit der niedrigeren Geschwindigkeit in ihren Fahrspuren nebeneinander fahren oder zum Stillstand kommen. In einem Schritt f) wird eines der zweiten Fahrzeuge zum Manöverleiter bestimmt, wobei der Manöverleiter mit dem ersten Fahrzeug kommuniziert, um mindestens eine Eigenschaft der Verkehrsstromlücke an das erste Fahrzeug zu übermitteln. Schließlich wertet das erste Fahrzeuge die vom Manöverleiter übermittelte mindestens eine eigene Eigenschaft der Verkehrsstromlücke aus, um die mehrere Fahrspuren breite Verkehrsstromlücke zu nutzen.

Zur Erzeugung der Verkehrsstromlücke blockieren demnach eine entsprechende Anzahl an zweiten Fahrzeugen eine entsprechende Anzahl an Fahrspuren, indem sie im Wesentlichen mit niedriger Geschwindigkeit nebeneinander fahren oder zum Stillstand gekommen sind.

Die Bezeichnung der Schritte soll keine strikte Abfolge zum Ausdruck bringen. Beispielsweise könnte der Manöverleiter auch bereits früher bestimmt werden.

Durch das erfindungsgemäße Verfahren lassen sich Fahrmanöver, die mehrere Fahrspuren betreffen, sicherer und komfortabler gestalten. Die Gefahr, dass auf einer der betroffenen Fahrspuren fahrende Fahrzeuge überraschend auf ein quasi stehendes Hindernis treffen, ist deutlich reduziert. Selbst wenn nicht alle Fahrzeuge, die auf der Fahrbahn unterwegs sind, mit V2X-Kommunikation ausgestattet sind, trägt die vorliegende Erfindung zur Erhöhung der Verkehrssicherheit bei. Bei der vorliegenden Erfindung ist vielmehr eine hinreichende Menge an kooperierenden Fahrzeugen ausreichend, um das beabsichtigte Fahrmanöver umzusetzen. Indem die das Manöver durchführenden zweiten Fahrzeuge, die die relevanten Fahrspuren zur Erzeugung der Verkehrsstromlücke blockieren sollen, allmählich ihre Geschwindigkeit reduzieren, wobei zur Unterrichtung nachfolgender Fahrzeuge die Warnblinkanlage der jeweiligen zweiten Fahrzeuge während der Verzögerung aktiviert sein kann, wird der nachfolgende Verkehr ausreichend früh in Kenntnis gesetzt, sodass diese Fahrzeuge ebenfalls allmählich ihre Geschwindigkeit reduzieren können. Häufig sind in Fahrzeugen bereits Abstandswarner eingebaut, die zuverlässig Unfälle zu verhindern helfen, indem sie dafür sorgen, dass die Relativgeschwindigkeit zwischen einem vorausfahrenden Fahrzeug und einem nachfolgenden Fahrzeug einen vorgebbaren Schwellenwert nicht überschreitet bzw. ein vorgebbarer Mindestabstand eingehalten wird oder bei Unterschreitung eines Mindestabstands gewarnt wird. Dadurch, dass der nachfolgende Verkehr nicht auf ein quasi stehendes Hindernis trifft, sondern die zweiten Fahrzeuge ihre Geschwindigkeit über eine vorgebbare Wegstrecke oder einen vorgebbaren Zeitraum reduzieren, sind die Kriterien zum sinnvollen Einsetzen eines Abstandswarners erfüllt.

Besonders bevorzugt werden in Schritt a) die Anforderungssignale gezielt in Richtung des Verkehrsstroms aufwärts des Orts der gewünschten Verkehrsstromlücke gesendet. Auf diese Weise werden die Anforderungssignale im Wesentlichen von Fahrzeugen empfangen, deren Mitwirken zur Durchführung des Fahrmanövers in Betracht kommt. Bevorzugt umfassen die Anforderungssignale Ortsangaben zum Ort der gewünschten Verkehrsstromlücke, d.h. einerseits den Abschnitt in Längsrichtung der Fahrbahn und andererseits die betroffenen Fahrspuren. Da üblicherweise heutzutage Fahrzeuge mit einem GPS-System ausgerüstet sind, können die Fahrzeuge feststellen, ob der Ort der gewünschten Verkehrsstromlücke noch vor ihnen liegt oder sie diesen Ort bereits passiert haben. Sie können auch prüfen, ob die Fahrspur betroffen ist, auf der sie gerade unterwegs sind.

Zum Senden der Anforderungssignale, zum Kommunizieren zwischen dem ersten und einem zweiten Fahrzeug und zum Kommunizieren zwischen den zweiten Fahrzeugen wird mindestens eines der folgenden Kommunikationsverfahren verwendet: C-V2X (Cellular-V2X), NR-V2X (New Radio-V2X), Antennen-Beamforming, Short-Range-Kommunikation. C-V2X ist eine globale Lösung für die sogenannte "Vehicle-to-Everything-Kommunikation", die der Verbesserung der Fahrzeugsicherheit, des automatisierten Fahrens und der Verkehrseffizienz dient. C-V2X ist eine V2X-Kommunikationstechnologie, die auf den weltweit anerkannten Spezifikationen des "3rd Generation Partnership Project" (3GPP) basiert. C-V2X setzt sich aus Direktkommunikation und netzbasierter Kommunikation zusammen und ergänzt die Sensorik anderer Fahrerassistenzsysteme wie Kameras, Radar und Lidar. Die C-V2X Direktkommunikation ist ohne Einbeziehung eines Mobilfunknetzes bzw. ohne Mobilfunkvertrag möglich, da der Betrieb über ein eigens entwickeltes und harmonisiertes 5,9 GHz ITS-Spektrum erfolgt.

Der Begriff New Radio oder 5G NR wurde vom 3GPP für das Release 15 geprägt. NR bezeichnet den Mobilfunkstandard der fünften Generation und ist damit der Nachfolger von LTE und UMTS.

Bevorzugt erfolgt in Schritt d) die Information der an dem Fahrmanöver teilnehmenden Fahrzeuge untereinander oder durch den Manöverleiter.

Zur Durchführung von Schritt c) ist es bevorzugt, wenn mit der Versendung des Anforderungssignals Daten übermittelt werden, aus der sich die Anzahl der zur Realisierung des Fahrmanövers benötigten zweiten Fahrzeuge ermitteln lässt, beispielsweise die Anzahl der betroffenen Fahrspuren. Da die Fahrzeuge untereinander die Signalisierungssignale der jeweils anderen Fahrzeuge empfangen und auswerten können, können somit die zur Realisierung des Fahrmanövers beteiligten zweiten Fahrzeuge selbst feststellen, ob bereits eine ausreichende Anzahl von zweiten Fahrzeugen vorliegt. Dabei kann ein Algorithmus hinterlegt sein, der bestimmt, welche zweiten Fahrzeuge an dem Fahrmanöver beteiligt werden, für den Fall, dass die Anzahl an zweiten Fahrzeugen, die der Anforderung nachkommen wollen, größer ist als die benötigte Mindestanzahl. Da es bevorzugt ist, dass jedes zweite Fahrzeug seine Position auf der Fahrbahn an die anderen Fahrzeuge übermittelt, können die zweiten Fahrzeuge, die sich am nächsten zum Ort der gewünschten Verkehrsstromlücke befinden, vom Algorithmus ausgewählt werden. Zur genauen Positionsbestimmung können Verfahren wie dGNSS oder RTK eingesetzt werden. Die ausgewählten Fahrzeuge werden in Schritt d) informiert. Alternativ kann der Manöverleiter die Auswertung vornehmen und die entsprechenden zweiten Fahrzeuge informieren. Die zweite Variante ist bevorzugt, da damit einheitliche Informationen bei jedem beteiligten zweiten Fahrzeug vorliegen.

In diesem Zusammenhang ist es bevorzugt, wenn das Fahrzeug zum Manöverleiter bestimmt wird, das einerseits ein Anforderungssignal erhalten hat und andererseits als erstes ein Signalisierungssignal versendet hat, dass es der Anforderung nachkommen will. Alternativ kann das Fahrzeug zum Manöverleiter bestimmt werden, dass sich bei Erreichen einer ausreichenden Anzahl von zweiten Fahrzeugen am nächsten zu dem Ort der gewünschten Verkehrsstromlücke befindet. Dadurch kann die Koordination des Fahrmanövers quasi von vorne erfolgen.

Bevorzugt tauschen die zweiten Fahrzeuge untereinander Daten aus, die ihre Bereitschaft zur Teilnahme an dem Fahrmanöver, ihre jeweilige Geschwindigkeit, ihren jeweiligen Standort sowie ihre jeweilige Trajektorie betreffen. Auf diese Weise lassen sich die von den einzelnen zweiten Fahrzeugen vorzunehmenden Fahrmanöver präzise aufeinander abstimmen.

Bevorzugt wird in Schritt f) als Eigenschaft der Verkehrsstromlücke der Zeitpunkt prädiziert, zu dem die Verkehrsstromlücke beim ersten Fahrzeug sein wird. Auf diese Weise kann sich das erste Fahrzeug bzw. der Fahrer des ersten Fahrzeugs rechtzeitig darauf einstellen, die Verkehrsstromlücke zu nutzen. Eine Beeinträchtigung des restlichen Verkehrs auf der Fahrbahn wird dadurch zeitlich minimiert.

Es ist weiterhin bevorzugt, dass dann, wenn in Schritt c) eine ausreichende Anzahl von zweiten Fahrzeugen festgestellt wurde, eine entsprechende Information an das erste Fahrzeug gesendet und im ersten Fahrzeug angezeigt wird. Auf diese Weise können sich die Insassen im ersten Fahrzeug darauf einstellen, dass demnächst das Fahrmanöver durchgeführt wird bzw. durchgeführt werden soll.

Weitere vorteilhafte Ausführungsformen ergeben sich aus den Unteransprüchen.

Die Erfindung betrifft weiterhin eine Steuervorrichtung für ein Fahrzeug, die dazu eingerichtet ist, die vom ersten und einem zweiten Fahrzeug vorzunehmenden Schritte eines erfindungsgemäßen Verfahrens durchzuführen, wobei die Steuervorrichtung vorzugsweise eine Prozessoreinrichtung aufweist. Die Erfindung betrifft weiterhin ein Kraftfahrzeug mit mindestens einer Kommunikationseinrichtung zum Kommunizieren mit anderen Kraftfahrzeugen, wobei das Kraftfahrzeug weiterhin eine erfindungsgemäße Steuervorrichtung aufweist, die mit der mindestens einen Kommunikationseinrichtung gekoppelt ist.

Zu der Erfindung gehören auch Weiterbildungen der erfindungsgemäßen Steuervorrichtung sowie des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: in schematischer Darstellung eine Situation zur Verdeutlichung eines Anwendungsfalls für das erfindungsgemäße Verfahren; und
- Fig. 2: ein Ablaufdiagramm für ein Ausführungsbeispiel des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden, wobei die Erfindung durch den Umfang der Ansprüche definiert ist.

In den Figuren bezeichnen gleiche Bezugszeichen jeweils funktionsgleiche Elemente.

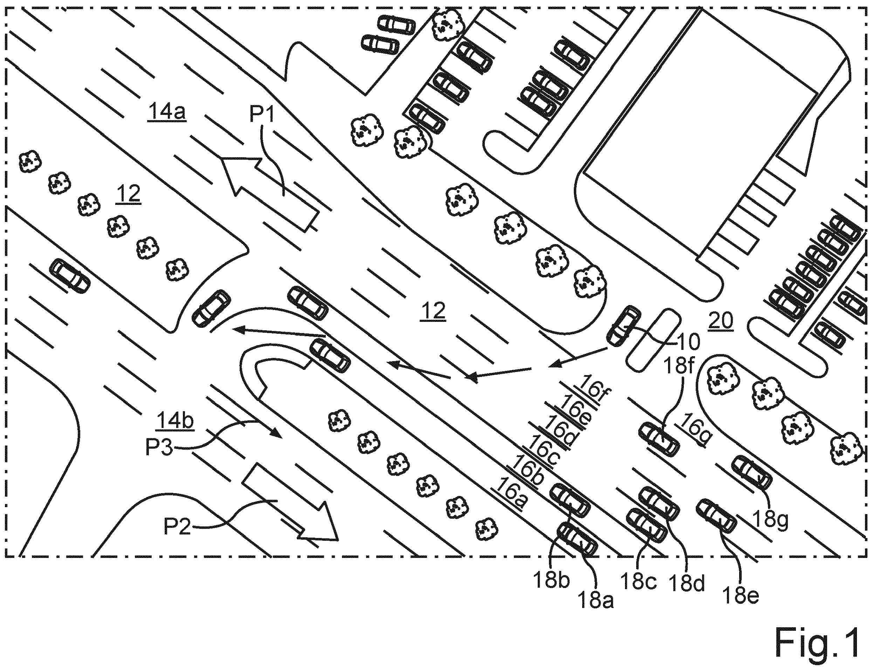

Die Darstellung von Fig. 1 zeigt eine Straße 12, die zwei voneinander getrennte Richtungsspuren 14a, 14b aufweist. Die Fahrtrichtung auf der Richtungsspur 14a ist mit einen Pfeil P1 gekennzeichnet, die auf der Richtungsspur 14b mit einem Pfeil P2.

Die Richtungsspur 14a umfasst in der Darstellung die Fahrspuren 16a bis 16g. Auf den Fahrspuren 16a bis 16g sind Kraftfahrzeuge 18a bis 18g unterwegs. Ein Kraftfahrzeug 10 möchte aus dem Parkplatz 20 einer Einkaufsmeile ausfahren und die Straße 12 in Richtung des Pfeils P3 befahren. Dazu muss das Kraftfahrzeug 10 die mit weiteren Pfeilen angezeigten Manöver umsetzen und fünf Fahrspuren 16f bis 16b kreuzen, um in die Fahrspur 16a einzubiegen. Bei hohem Verkehrsaufkommen ist dies gefährlich und bedarf einer langen Wartezeit.

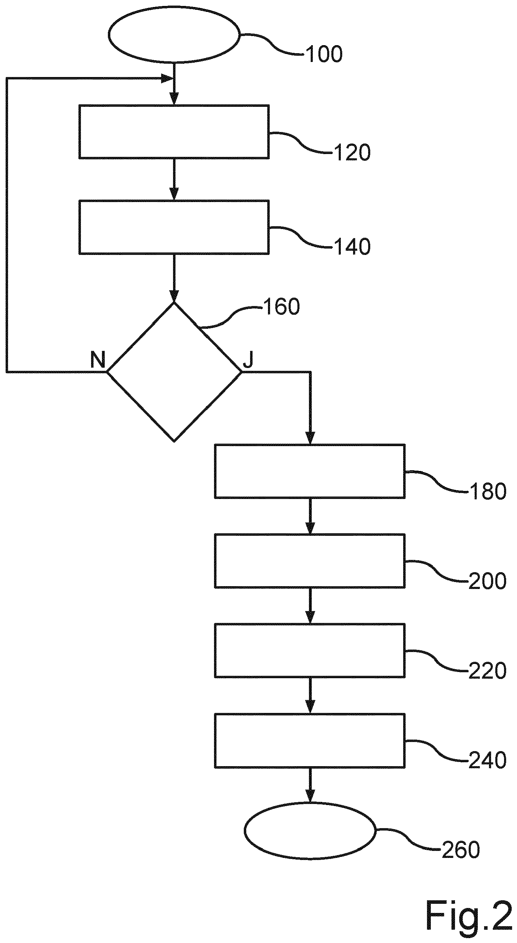

Um diese Manöver sicher und komfortabel zu gestalten, wird das in Fig. 2 dargestellte Verfahren durchgeführt. Dieses beginnt in Schritt 100. Im Schritt 120 sendet das Fahrzeug 10, das eine Verkehrsstromlücke betreffend die Fahrbahnen 16a bis 16f anfordert, periodisch entsprechende Anforderungssignale an die sich im Verkehrsstrom aufwärts des Orts der gewünschten Verkehrsstromlücke befindenden Fahrzeuge 18a bis 18g. Die Fahrzeuge 18a bis 18g empfangen diese Anforderungssignale und prüfen zunächst, ob der Ort der gewünschten Verkehrsstromlücke noch vor ihnen liegt und ob von der gewünschten Verkehrsstromlücke ihre Fahrspur betroffen ist. Das auf der Fahrspur 16g fahrende Fahrzeug 18g ist von dem Fahrmanöver zur Erzeugung einer Verkehrsstromlücke nicht betroffen. Es setzt seine Fahrt ungehindert fort.

Im vorliegenden Fall versenden die Fahrzeuge 18a bis 18f, die betroffen sind und die der Aufforderung nachkommen wollen, im Schritt 140 entsprechende Signalisierungssignale. Im Schritt 160 wird geprüft, ob aufgrund des Empfangs der gesendeten Signalisierungssignale eine zum Abdecken der mehreren Fahrspuren 16b bis 16f der Verkehrsstromlücke ausreichende Mindestanzahl von Fahrzeugen, die der Anforderung nachkommen wollen, feststellbar ist. Wenn beispielsweise das Fahrzeug 18d, das auf der Fahrspur 16d unterwegs ist, der Anforderung nicht nachkommen will, wird gewartet, bis ein auf der Fahrspur 16d nachfolgendes Fahrzeug signalisiert, dass es der Anforderung nachkommen will. Insbesondere bei pilotierten Fahrzeugen kann ein Fahrzeug, das seine Bereitschaft zum Nachkommen der Anforderung erklärt hat, jedoch auch auf eine Fahrspur umgeleitet werden, auf der noch kein Fahrzeug seine Bereitschaft erklärt hat, der Anforderung nachzukommen. Entsprechendes gilt für die anderen Fahrzeuge bzw. die anderen Fahrspuren.

Ist noch keine ausreichende Mindestanzahl an Fahrzeugen feststellbar, zweigt das Verfahren zurück zu Schritt 120. Sofern jedoch im Schritt 160 eine ausreichende Anzahl an Fahrzeugen festgestellt wird, zweigt das Verfahren weiter zu Schritt 180. Im Schritt 180 werden die an dem Fahrmanöver zum Erzeugen der Verkehrsstromlücke teilnehmenden Fahrzeuge informiert.

Im darauffolgenden Schritt 200 vereinbaren die am Fahrmanöver teilnehmenden zweiten Fahrzeuge den Beginn des Fahrmanövers und stimmen ihre Trajektorien aufeinander ab. Die Trajektorien bestimmen, welches Fahrzeug auf welcher Fahrbahn seine Geschwindigkeit wie reduziert, sodass die gewünschte Verkehrsstromlücke erzeugt wird. Spätestens in Schritt 220 wird ein Fahrzeug zum Manöverleiter, zum sogenannten Platoonleader, bestimmt, wobei der Manöverleiter die Kommunikation mit dem ersten Fahrzeug übernimmt, um mindestens eine Eigenschaft der Verkehrsstromlücke an das erste Fahrzeug zu übermitteln. Dabei handelt es sich insbesondere um eine Prädiktion des Zeitpunkts, zu dem die Verkehrsstromlücke beim Fahrzeug 10 sein wird.

Als Manöverleiter kann das Fahrzeug bestimmt werden, das einerseits ein Anforderungssignal erhalten hat und andererseits als erstes ein Signalisierungssignal versendet hat, dass es der Anforderung nachkommen will. Alternativ kann als Manöverleiter das Fahrzeug bestimmt werden, das sich bei Erreichen einer ausreichenden Anzahl von zweiten Fahrzeugen am nächsten zu dem Ort der gewünschten Verkehrsstromlücke befindet.

Im Schritt 240 wertet das erste Fahrzeug die vom Manöverleiter, beispielweise dem Fahrzeug 18b, übermittelte mindestens eine Eigenschaft der Verkehrsstromlücke aus, um die Verkehrsstromlücke zu nutzen. Die die Verkehrsstromlücke erzeugenden Fahrzeuge bilden eine Art "vertikalen" Platoon für die Dauer des Manövers und führen ihr jeweiliges Manöver aus, um die Verkehrsstromlücke zu bilden. Nach Erzeugen der Verkehrsstromlücke nutzt das Fahrzeug 10 die Verkehrsstromlücke und führt das mit Pfeilen gekennzeichnete Fahrmanöver während des Vorhandenseins der Verkehrsstromlücke aus, um anschließend die Richtungsspur 14b entsprechend dem Pfeil P3 zu befahren. Anschließend wird die Verkehrsstromlücke wieder aufgelöst, dadurch dass die an dem Fahrmanöver beteiligten Fahrzeuge, die die Verkehrsstromlücke gebildet haben, ihre ursprüngliche Fahrt wieder aufnehmen.

Das Verfahren endet im Schritt 260.

## Patentansprüche

1. Verfahren zum Durchführen eines Fahrmanövers unter Beteiligung eines ersten (10) und einer Vielzahl von zweiten Fahrzeugen (18a bis 18f), wobei durch das Fahrmanöver eine Verkehrsstromlücke erzeugt wird, die mehrere Fahrspuren (16a bis 16f) breit ist, folgende Schritte umfassend:
a) das erste Fahrzeug (10), das die Verkehrsstromlücke anfordert, sendet periodisch entsprechende Anforderungssignale zumindest an eine Vielzahl von sich im Verkehrsstrom aufwärts des Orts der gewünschten Verkehrsstromlücke befindenden zweiten Fahrzeugen (18a bis 18g) (Schritt 120);
b) die zweiten Fahrzeuge (18a bis 18g) empfangen diese Anforderungssignale, wobei zumindest die zweiten Fahrzeuge (18a bis 18g), die der Anforderung nachkommen wollen, entsprechende Signalisierungssignale versenden (Schritt 140);
c) Prüfen, ob aufgrund des Empfangs der in Schritt b) gesendeten Signalisierungssignale eine zum Abdecken der mehreren Fahrspuren (16a bis 16g) der gewünschten Verkehrsstromlücke ausreichende Mindestanzahl von zweiten Fahrzeugen (18a bis 18g), die der Anforderung nachkommen wollen, feststellbar ist, um mit einer entsprechenden Anzahl an zweiten Fahrzeugen (18a bis 18f) eine entsprechende Anzahl an Fahrspuren (16a bis 16f) zu blockieren, wobei die Fahrzeuge untereinander die Signalisierungssignale der jeweils anderen Fahrzeuge empfangen und auswerten, so dass die zur Realisierung des Fahrmanövers beteiligten zweiten Fahrzeuge (18a bis 18f) selbst feststellen, ob bereits eine ausreichende Anzahl von zweiten Fahrzeugen (18a bis 18f) vorliegt (Schritt 160);
d) wird Schritt c) bejaht, werden die an dem Fahrmanöver zum Erzeugen der Verkehrsstromlücke teilnehmenden zweiten Fahrzeuge (18a bis 18f) informiert (Schritt 180);
e) die am Fahrmanöver teilnehmenden zweiten Fahrzeuge (18a bis 18f) vereinbaren den Beginn des Fahrmanövers und stimmen ihre Trajektorien aufeinander ab (Schritt 200), wobei die an dem Fahrmanöver teilnehmenden zweiten Fahrzeuge (18a bis 18f) über eine vorgebbare Wegstrecke oder einen vorgebbaren Zeitraum ihre Geschwindigkeit reduzieren, so dass sie mit niedriger Geschwindigkeit in ihren Fahrspuren nebeneinander fahren oder zum Stillstand kommen;
f) eines der zweiten Fahrzeuge wird zum Manöverleiter (18b) bestimmt, wobei der Manöverleiter (18b) mit dem ersten Fahrzeug (10) kommuniziert, um mindestens eine Eigenschaft der Verkehrsstromlücke an das erste Fahrzeug (10) zu übermitteln (Schritt 220); und
g) das erste Fahrzeug (10) wertet die vom Manöverleiter (18b) übermittelte mindestens eine Eigenschaft der Verkehrsstromlücke aus, um die mehrere Fahrspuren (16a bis 16f) breite Verkehrsstromlücke zu nutzen (Schritt 240).

2. Verfahren nach Anspruch 1,
**dadurch gekennzeichnet, dass**
in Schritt a) (Schritt 120) die Anforderungssignale gezielt in Richtung des Verkehrsstroms aufwärts des Orts der gewünschten Verkehrsstromlücke gesendet werden.

3. Verfahren nach einem der vorhergehenden Ansprüche,
**dadurch gekennzeichnet, dass**
zum Senden der Anforderungssignale, zum Kommunizieren zwischen dem ersten (10) und einem zweiten Fahrzeug (18a bis 18g) und zum Kommunizieren zwischen den zweiten Fahrzeugen (18a bis 18g) mindestens eines der folgenden Kommunikationsverfahren verwendet wird:
- C-V2X,
- NR-V2X,
- Antennen-Beamforming,
- Short-Range-Kommunikation.

4. Verfahren nach einem der vorhergehenden Ansprüche,
**dadurch gekennzeichnet, dass**
in Schritt d) (Schritt 180) die Information der an dem Fahrmanöver teilnehmenden Fahrzeuge (18a bis 18g) untereinander oder durch den Manöverleiter (18b) erfolgt.

5. Verfahren nach einem der vorhergehenden Ansprüche,
**dadurch gekennzeichnet, dass**
das Fahrzeug zum Manöverleiter (18b) bestimmt wird, das einerseits ein Anforderungssignal erhalten hat und andererseits als erstes ein Signalisierungssignal versendet hat, dass es der Anforderung nachkommen will.

6. Verfahren nach einem der Ansprüche 1 bis 4,
**dadurch gekennzeichnet, dass**
das Fahrzeug zum Manöverleiter (18b) bestimmt wird, das sich bei Erreichen einer ausreichenden Anzahl von zweiten Fahrzeugen am nächsten zu dem Ort der gewünschten Verkehrsstromlücke befindet.

7. Verfahren nach einem der vorhergehenden Ansprüche,
**dadurch gekennzeichnet, dass**
die zweiten Fahrzeuge (18a bis 18g) untereinander Daten austauschen, die ihre Bereitschaft zur Teilnahme an dem Fahrmanöver, ihre jeweilige Geschwindigkeit, ihren jeweiligen Standort sowie ihre jeweilige Trajektorie betreffen.

8. Verfahren nach einem der vorhergehenden Ansprüche,
**dadurch gekennzeichnet, dass**
in Schritt f) (Schritt 220) als Eigenschaft der Verkehrsstromlücke der Zeitpunkt prädiziert wird, zu dem die Verkehrsstromlücke beim ersten Fahrzeug (10) sein wird.

9. Verfahren nach einem der vorhergehenden Ansprüche,
**dadurch gekennzeichnet, dass**
dann, wenn in Schritt c) (Schritt 160) eine ausreichende Anzahl von zweiten Fahrzeugen (18a bis 18g) festgestellt wurde, eine entsprechende Information an das erste Fahrzeug (10) gesendet und im ersten Fahrzeug (10) angezeigt wird.

10. Steuervorrichtung für ein Fahrzeug,
**dadurch gekennzeichnet, dass**
sie dazu eingerichtet ist, die vom ersten (10) und einem zweiten Fahrzeug (18a bis 18g) vorzunehmenden Schritte eines Verfahrens nach einem der vorhergehenden Ansprüche durchzuführen, wobei die Steuervorrichtung vorzugsweise eine Prozessoreinrichtung aufweist.

11. Kraftfahrzeug mit mindestens einer Kommunikationseinrichtung zum Kommunizieren mit anderen Kraftfahrzeugen (18a bis 18g),
**dadurch gekennzeichnet, dass**
das Kraftfahrzeug weiterhin eine Steuervorrichtung nach Anspruch 10 aufweist, die mit der mindestens einen Kommunikationseinrichtung gekoppelt ist.

## Claims

1. A method for performing a driving maneuver with involvement of a first (10) and a plurality of second vehicles (18a to 18f), wherein a traffic flow gap is generated by the driving maneuver, which is multiple lanes (16a to 16f) wide, comprising the following steps:
a) the first vehicle (10), which requests the traffic flow gap, periodically transmits corresponding request signals at least to a plurality of second vehicles (18a to 18g) situated upstream of the location of the desired traffic flow gap in the traffic flow (step 120);
b) the second vehicles (18a to 18g) receive these request signals, wherein at least the second vehicles (18a to 18g), which intend to comply with the request, transmit corresponding signaling signals (step 140);
c) examining if due to the reception of the signaling signals transmitted in step b), a minimum number of second vehicles (18a to 18g) sufficient for covering the multiple lanes (16a to 16g) of the desired traffic flow gap, which intend to comply with the request, can be determined, to block a corresponding number of lanes (16a to 16f) with a corresponding number of second vehicles (18a to 18f) , wherein the vehicles receive and evaluate the signaling signals of the respectively other vehicles among each other, such that the second vehicles (18a to 18f) involved in realizing the driving maneuver themselves determine if a sufficient number of second vehicles (18a to 18f) is already present (step 160);
d) if step c) is affirmed, the second vehicles (18a to 18f) participating in the driving maneuver for generating the traffic flow gap are informed (step 180);
e) the second vehicles (18a to 18f) participating in the driving maneuver agree on the beginning of the driving maneuver and match their trajectories with each other (step 200), wherein the second vehicles (18a to 18f) participating in the driving maneuver reduce their speed over a presettable path distance or a presettable period of time such that they drive next to each other in their lanes with low speed or come to a stop;
f) one of the second vehicles is determined as a maneuver leader (18b), wherein the maneuver leader (18b) communicates with the first vehicle (10) to transfer at least one characteristic of the traffic flow gap to the first vehicle (10) (step 220); and
g) the first vehicle (10) evaluates the at least one characteristic of the traffic flow gap transferred by the maneuver leader (18b), to use the multiple lanes (16a to 16f) wide traffic flow gap (step 240).

2. The method according to claim 1,
**characterized in that**
in step a) (step 120), the request signals are specifically transmitted upstream of the location of the desired traffic flow gap in the direction of the traffic flow.

3. The method according to any one of the preceding claims,
**characterized in that**
for transmitting the request signals, for communicating between the first (10) and a second vehicle (18a to 18g) and for communicating between the second vehicles (18a to 18g), at least one of the following communication methods is used:
- C-V2X,
- NR-V2X,
- antenna beam forming,
- short-range communication.

4. The method according to any one of the preceding claims,
**characterized in that**
in step d) (step 180), informing the vehicles (18a to 18g) participating in the driving maneuver is effected among each other or by the maneuver leader (18b).

5. The method according to any one of the preceding claims,
**characterized in that**
that vehicle is determined as the maneuver leader (18b), which has obtained a request signal on the one hand and has first transmitted a signaling signal that it intends to comply with the request on the other hand.

6. The method according to any one of claims 1 to 4,
**characterized in that**
that vehicle is determined as the maneuver leader (18b), which is closest to the location of the desired traffic flow gap upon reaching a sufficient number of second vehicles.

7. The method according to any one of the preceding claims,
**characterized in that**
the second vehicles (18a to 18g) exchange data with each other, which relates to their willingness to participate in the driving maneuver, their respective speed, their respective location as well as their respective trajectory.

8. The method according to any one of the preceding claims,
**characterized in that**
in step f) (step 220), the point of time is predicated as the characteristic of the traffic flow gap, at which the traffic flow gap will be at the first vehicle (10).

9. The method according to any one of the preceding claims,
**characterized in that**
if a sufficient number of second vehicles (18a to 18g) has been determined in step c) (step 160), corresponding information is transmitted to the first vehicle (10) and displayed in the first vehicle (10).

10. A control device for a vehicle,
**characterized in that**
it is configured to perform the steps of a method according to any one of the preceding claims to be performed by the first (10) and a second vehicle (18a to 18g), wherein the control device preferably comprises a processor device.

11. A motor vehicle with at least one communication device for communicating with other motor vehicles (18a to 18g),
**characterized in that**
the motor vehicle further comprises a control device according to claim 10, which is coupled to the at least one communication device.

## Revendications

1. Procédé d'exécution d'une manoeuvre de conduite impliquant un premier (10) et une pluralité de seconds véhicules (18a à 18f), dans lequel, par la manoeuvre de conduite, une interruption dans le flux de trafic est créée qui présente une largeur de plusieurs voies (16a à 16f), comportant les étapes suivantes:
a) le premier véhicule (10), qui demande l'interruption dans le flux de trafic, envoie périodiquement des signaux de demande correspondants à au moins une pluralité de seconds véhicules (18a à 18g) se trouvant dans le flux de trafic en amont de l'endroit de l'interruption dans le flux de trafic demandée (l'étape 120);
b) les seconds véhicules (18a à 18g) reçoivent ces signaux de demande, dans lequel au moins les seconds véhicules (18a à 18g), qui souhaitent se conformer à la demande, envoient des signaux de signalisation correspondants (l'étape 140);
c) vérifier si en vertu de la réception des signaux de signalisation envoyés dans l'étape b) un nombre minimum suffisant de seconds véhicules (18a à 18g) pour couvrir les plusieurs voies (16a à 16g) de l'interruption dans le flux de trafic demandée, qui souhaitent se conformer à la demande, est détecté, pour bloquer un nombre correspondant de voies (16a à 16f) avec un nombre correspondant de seconds véhicules (18a à 18f), dans lequel les véhicules entre eux reçoivent et exploitent les signaux de signalisation des autres véhicules, de sorte que les seconds véhicules (18a à 18f) participant à la réalisation de la manoeuvre de conduite constatent ils-même, si un nombre suffisant de seconds véhicules (18a à 18f) existe déjà (l'étape 160);
d) si l'étape c) est affirmée, les seconds véhicules (18a à 18f) participant à la manoeuvre de conduite visant à créer l'interruption dans le flux de trafic sont informés (l'étape 180);
e) les seconds véhicules (18a à 18f) participant à la manoeuvre de conduite s'accordent sur le début de la manoeuvre de conduite et coordonnent leurs trajectoires (l'étape 200), dans lequel seconds véhicules (18a à 18f) participant à la manoeuvre de conduite réduisent leur vitesse sur une distance prédéfinissable ou une période de temps prédéfinissable de sorte qu'ils roulent dans leurs voies côte à côte à faible vitesse ou s'arrêtent;
f) un des seconds véhicules est défini le chef de manoeuvre (18b), dans lequel le chef de manoeuvre (18b) communique avec le premier véhicule (10) pour transmettre au moins une caractéristique de l'interruption dans le flux de trafic au premier véhicule (10) (l'étape 220); et
g) le premier véhicule (10) exploite l'au moins une caractéristique de l'interruption dans le flux de trafic transmise par le chef de manoeuvre (18b) pour utiliser l'interruption dans le flux de trafic présentant une largeur de plusieurs voies (16a à 16f) (l'étape 240).

2. Procédé selon la revendication 1,
**caractérisé en ce que**
dans l'étape a) (l'étape 120) les signaux de demande sont envoyés spécifiquement dans la direction du flux de trafic en amont de l'endroit de l'interruption dans le flux de trafic demandée.

3. Procédé selon l'une quelconque des revendications précédentes, **caractérisé en ce que**
pour envoyer les signaux de demande, pour communiquer entre le premier (10) et le second véhicule (18a à 18g) et pour communiquer entre les seconds véhicules (18a à 18g), au moins un des procédés de communication suivants est utilisé:
- C-V2X,
- NR-V2X,
- *beamforming* d'antennes
- communication à courte portée.

4. Procédé selon l'une quelconque des revendications précédentes,
**caractérisé en ce que**
dans l'étape d) (l'étape 180), l'information des véhicules (18a à 18g) participant à la manoeuvre de conduite est transmise entre eux ou par le chef de manoeuvre (18b).

5. Procédé selon l'une quelconque des revendications précédentes,
**caractérisé en ce que**
le véhicule est désigné comme étant le chef de manoeuvre (18b) qui, d'une part, a reçu un signal de demande et, d'autre part, a été le premier à envoyer un signal de signalisation qu'il souhaite se conformer à la demande.

6. Procédé selon l'une quelconque des revendications 1 à 4,
**caractérisé en ce que**
le véhicule est désigné comme étant le chef de manoeuvre (18b), qui est le plus proche de l'endroit de l'interruption dans le flux de trafic demandée, lorsque un nombre suffisant de seconds véhicules est atteint.

7. Procédé selon l'une quelconque des revendications précédentes,
**caractérisé en ce que**
les seconds véhicules (18a à 18g) échangent des données entre eux concernant leur volonté de participer à la manoeuvre de conduite, leur vitesse respective, leur localisation respective ainsi que leur trajectoire respective.

8. Procédé selon l'une quelconque des revendications précédentes,
**caractérisé en ce que**
dans l'étape f) (l'étape 220), en tant que caractéristique de l'interruption dans le flux de trafic, le moment est anticipé où l'interruption dans le flux de trafic se trouvera au premier véhicule (10).

9. Procédé selon l'une quelconque des revendications précédentes
**caractérisé en ce que**
lorsque, dans l'étape c) (l'étape 160) un nombre suffisant de seconds véhicules (18a à 18g) a été constaté, une information correspondante est envoyée au premier véhicule (10) et est affiché dans le premier véhicule (10).

10. Dispositif de commande pour un véhicule,
**caractérisé en ce que**
il est configuré pour réaliser les étapes d'un procédé selon l'une quelconque des revendications précédentes à effectuer par le premier (10) et un second véhicule (18a à 18g), dans lequel le dispositif de commande, de préférence, comporte un moyen processeur.

11. Véhicule à moteur comportant au moins un dispositif de communication pour communiquer avec d'autres véhicules à moteur (18a à 18g),
**caractérisé en ce que**
le véhicule à moteur comporte en outre un dispositif de commande selon la revendication 10 qui est couplé à l'au moins un dispositif de communication.
